# EUROPÄISCHE PATENTSCHRIFT

(11) **EP 1 714 774 B1**
(45) Veröffentlichungstag und Bekanntmachung des Hinweises auf die Patenterteilung: **11.05.2011**
(21) Anmeldenummer: 06005700.7
(22) Anmeldetag: 21.03.2006
(51) Int. Cl.: B30B 15/00, B25J 21/02

(54) **Transferschleuse für eine Tablettieranlage**
Transfer lock in an installation for the production of tablets
Sas de transfert dans une installation pour la production de comprimés

(30) Priorität: 20.04.2005 DE 102005018905
(43) Veröffentlichungstag der Anmeldung: 25.10.2006
(73) Patentinhaber: Fette GmbH, 21493 Schwarzenbek (DE)
(72) Erfinder: Römer, Harald, 21465 Reinbek (DE); Schade, Frank, 23881 Anker (DE); Nuppenau, Detlef, 23911 Salem (DE); Arndt, Ulrich, 21481 Lauenburg (DE)
(74) Vertreter: Hauck Patent- und Rechtsanwälte

(56) Entgegenhaltungen:
- EP-A1- 0 586 307
- WO-A-2004/091868
- US-A- 5 447 699
- US-A- 5 567 025
- US-A1- 2005 042 710

## Beschreibung

Die Erfindung bezieht sich auf ein Gehäuse für eine Tablettieranlage nach dem Oberbegriff des Patentanspruchs 1.

Tablettiermaschinen enthalten üblicherweise eine sogenannte Rundläuferpresse, die in einem Gehäuse untergebracht ist. Das Gehäuse ist normalerweise durch Seitenwände und/oder Fensterklappen nach außen dicht abgeschlossen, damit kein Produktstaub nach außen dringt, der unvermeidlich während des Betriebs entwickelt wird. Bei stärkeren Staubentwicklungen wird dieser permanent abgesaugt. Die Zufuhr des Pulvermaterials und die Abfuhr der Tabletten erfolgt über Kanäle in das Gehäuse hinein bzw. aus diesem heraus.

Bei Tabletten, die konzentrierte oder toxische Stoffe enthalten, ist es notwendig, diese aus dem Gehäuseinnenraum der Tablettiermaschine zur weiteren Verarbeitung und Verpackung zu entfernen, ohne daß Bedienungspersonen mit diesen in Berührung gelangen oder sie schädlichen Umwelteinflüssen ausgesetzt sind. Bei strengen Sterilitätsanforderungen ist nach Möglichkeit der Austausch von Teilen der Rundläuferpresse und sonstigen Bauteilen derart, daß die Bedienungsperson mit diesen Bauteilen nicht in Berührung kommt oder die Umwelt kontaminiert wird. Es ist daher bekannt, sogenannte Transferschleusen (z.B. RTP) vorzusehen. Sie weisen eine Klappe auf, die im Bereich einer Öffnung in einer Gehäusewand nach innen schwenkbar gelagert ist und die normalerweise die Öffnung dichtend verschließt. Zu diesem Zweck ist an der Innenseite der Gehäusewand eine Verriegelungsvorrichtung angebracht, die zunächst entriegelt werden muß, wenn die Klappe geöffnet werden soll. Die Entriegelung erfolgt von innen. Damit entriegelt werden kann ist in der Gehäusewand nahe der Öffnung ein Handschuheingriff vorgesehen.

Ein Schleusenkanal, beispielsweise ein Rohrstück oder ein Schlauch größeren Durchmessers, weist an einem Ende ein Gegenprofil auf, das mit einem Anschlußprofil um die Öffnung in der Gehäusewand herum zusammenwirkt. Ferner ist an diesem Ende des Schleusenkanals eine zweite Klappe angebracht, die mit einem Mitnahmeprofil der ersten Klappe zusammenwirkt, wenn Anschluß- und Gegenprofil in Eingriff gebracht sind. Wird nunmehr die erste Klappe von innen entriegelt, kann mit der ersten Klappe die zweite in das Innere des Pressengehäuses hineingeschwenkt werden. Dadurch ist ein abgedichteter Durchgang vom Schleusenkanal zum Gehäuseinnern geschaffen. Mit Hilfe des Handschuheingriffs kann aus dem nach außen verschlossenen Schleusenkanal ein Gegenstand entnommen oder in diesen hineingelegt werden.

Anschlußprofil und Gegenprofil bilden zumeist eine Bajonettverbindung. Zur Erstellung des Anschlußprofils in der Gehäusewand ist bekannt, Metallflansche aus Edelstahl zu formen und diese auf beiden Seiten der Öffnung zu verschrauben. Die Herstellung und Anbringung derartiger Teile ist aufwendig und erfordert eine große Sorgfalt im Hinblick auf Dichtigkeit und Sterilität.

Aus EP 0 586 307 A1 ist bekannt geworden, eine Gehäuse für eine Tablettieranlage gemäß dem Oberbegriff des Anspruchs 1 mit einer Transferschleuse wahlweise zu verbinden. Zu diesem Zweck weist eine Wand des Behälters eine Öffnung auf mit einem Anschlussprofil. An der Wand ist auch eine erste Klappe angelenkt. Der Transferbehälter kann mit einem weiteren Profil mit dem Anschlussprofil in Verbindung gebracht werden. Eine an dem Transferbehälter anbringbare zweite Klappe kann mit der ersten Klappe über ein entsprechendes Mitnahmeprofil verbunden werden.

Aus US-A-5,567,025 ist bekannt geworden, Öffnungen von miteinander in Verbindung zu bringenden Behältern für steriles Material mit separaten Profilflanschen zu versehen. Die aus Stahl oder Aluminium bestehenden Profilflansche können mit der Wand des Behälters verklebt oder verschweißt werden.

Der Erfindung liegt die Aufgabe zugrunde, ein Gehäuse für eine Tablettieranlage zu schaffen, bei der der Montageaufwand für eine Transferschleuse verringert und eine verbesserte Dichtigkeit erzielt wird. Außerdem soll das Gewicht der die Transferschleuse ermöglichenden Teile reduziert werden.

Diese Aufgabe wird durch die Merkmale des Patentanspruchs 1 gelöst.

Erfindungsgemäß ist das Anschlußprofil in einem Materialabschnitt einer Fensterklappe geformt, die eine transparente Gehäusewand bildet. Der Materialabschnitt ist mit der Fensterklappe durch Verklebung und Verschweißung verbunden.

Die Erfindung hat den Vorteil, daß der Montageaufwand deutlich verringert und eine hohe Dichtigkeit erzielt wird. Ferner werden Spalten und Fügeflächen, die problematisch zu reinigen sind, vermieden. Insgesamt ist die Reinigungsmöglichkeit verbessert. Schließlich wird auch eine Gewichtsreduzierung erhalten.

Die Erfindung wird nachfolgend anhand von Zeichnungen näher erläutert.
- Fig. 1: zeigt perspektivisch die Rückansicht einer Gehäusewand eines erfindungsgemäßen Gehäuses einer Tablettiermaschine.
- Fig. 2: zeigt einen Ausschnitt der Darstellung nach Fig. 1 bei geöffneter erster Klappe.
- Fig. 3: zeigt die Frontansicht der Gehäusewand nach Fig. 1.
- Fig. 4: zeigt einen Schnitt durch die Darstellung nach Fig. 3 entlang der Linie 4-4.
- Fig. 5: zeigt die Vorderansicht einer Gehäusewand eines erfindungsgemäßen Gehäuses einer Tablettiermaschine.
- Fig. 6: zeigt vergrößert den in Figur 5 eingekreisten Teil der Vorderseite.
- Fig. 7: zeigt perspektivisch ein Schleusensystem nach dem Stand der Technik vor der Inbetriebnahme.
- Fig. 8: zeigt perspektivisch das System nach Fig. 7 während der Inbetrieb- nahme.
- Fig. 9: zeigt vergrößert die Einzelheit 5 nach Fig. 4.

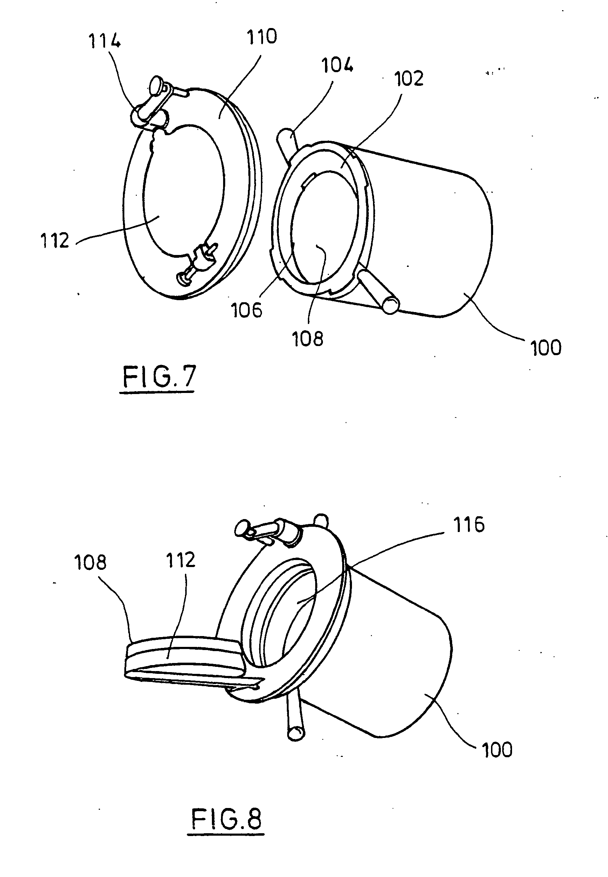

In den Figuren 7 und 8, die den Stand der Technik wiedergeben, ist ein Schleusenbehälter 100 dargestellt, der am in Figur 7 linken Ende ein Gegenprofil 102 aufweist, in Form eines Bajonett-Teils. Griffe an gegenüberliegenden Seiten (bei 104 dargestellt) dienen zur Handhabung des Schleusenbehälters. Innerhalb des Ringprofils 102 befindet sich ein Deckel 106, der den Behälter 100 dichtend verschließt. Er weist in einem Randbereich ein Gegenmitnahmeprofil 108 auf, das ebenfalls nach Art eines Bajonett-Verbindungsteils geformt ist.

Ein Flanschteil 110, z.B. aus Edelstahl, lagert schwenkbar eine Klappe 112, welche von einer Verriegelungsvorrichtung 114 in der Schließstellung gehalten wird.

Durch Ansetzen des Schleusenbehälters 100 an das nicht gezeigte Aufnahmeprofil des Flansches 100 und durch Drehen z.B. um 60° wird der Schleusenbehälter 100 am Profil 110 dichtend angebracht. Gleichzeitig erfolgt über das Gegenmitnahmeprofil des Deckels 106 eine Verriegelung an der Klappe 112. Dadurch ist die Möglichkeit geschaffen, die Verriegelungsvorrichtung 114 zu entriegeln und die Klappe 112 kann ausgeschwenkt werden, wie in Figur 8 zu erkennen. Bei dem Ausschwenken der Klappe 112 wird der Deckel 108 mitgenommen. Nunmehr ist eine Verbindung zwischen dem Inneren 116 des Schleusenbehälters 100 mit dem nicht gezeigten Inneren des Gehäuses, zu dem der Flansch 110 gehört.

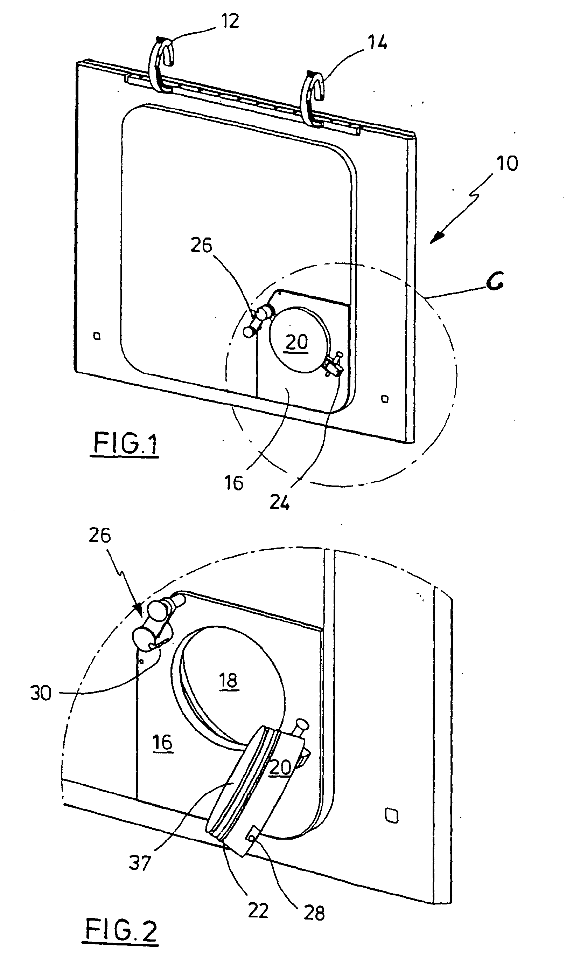

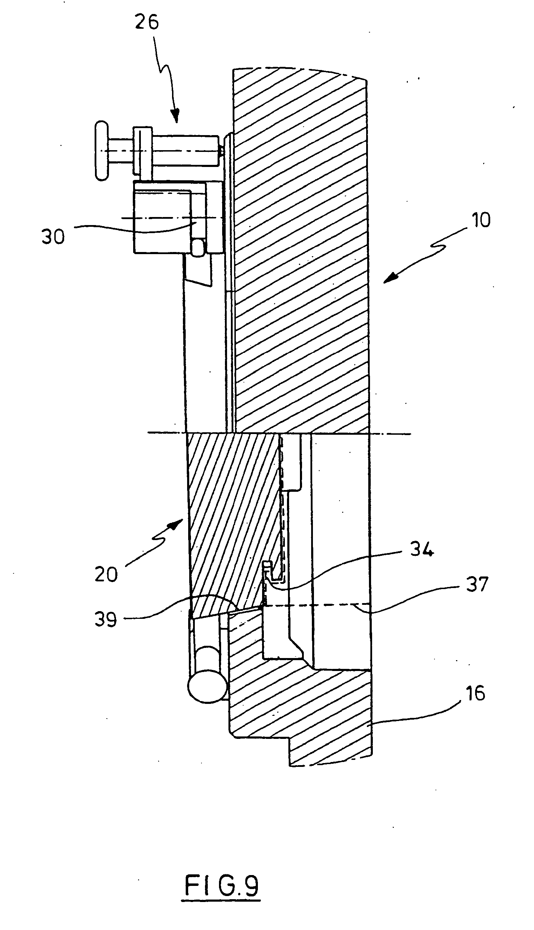

In den Fign. 1 und 9 ist eine Seitenwand 10 eines Gehäuses einer nicht näher dargestellten Tablettiermaschine in Form einer Rundläuferpresse dargestellt. Die Seitenwand ist aus transparentem Material geformt und als Fensterklappe ausgebildet, die um hakenförmige Lagerbauteile 12, 14 an der oberen Kante schwenkbar am Gehäuse gelagert ist. In der geschlossenen Stellung kann die Fensterklappe 10 dicht verriegelt werden, was jedoch nicht dargestellt ist.

In einem leicht verdickten Abschnitt 16 der Seitenwand 10 ist eine Kreisöffnung 18 geformt, welche durch eine erste Klappe 20 verschließbar ist. Eine Dichtung 22 sorgt für eine ausreichende Abdichtung in der Schließstellung durch Zusammenwirken mit einer Dichtfläche 39 der Öffnung. Die Klappe 20 ist an einem Scharnier 24, das am Abschnitt 16 an dessen Innenseite angebracht ist, schwenkbar. Fig. 1 zeigt die geschlossene und Fig. 2 bzw. Fig. 5 und 6 die geöffnete Stellung. Eine ebenfalls an der Innenseite angebrachte Verriegelungsvorrichtung 26 dient zum Verriegeln der Klappe 20 in der geschlossenen Stellung. Die Klappe 20 hat am Umfang einen Verriegelungsstift 28, der mit einer L-förmigen Verriegelungsnut 30 eines Verriegelungselements (Fig. 9) zusammenwirkt.

Die Verriegelungsvorrichtung 26 kann nur von der Innenseite des nicht dargestellten Gehäuses betätigt werden. Um in das Innere des Gehäuses zu gelangen, ist ferner in der Fensterklappe 10 oder im benachbarten Wandabschnitt eine Handschuhöffnung vorgesehen (in den Fign. nicht gezeigt). Über diese kann der Bediener in das Innere des Gehäuses eingreifen und etwa auch die Verriegelungsvorrichtung 26 betätigen.

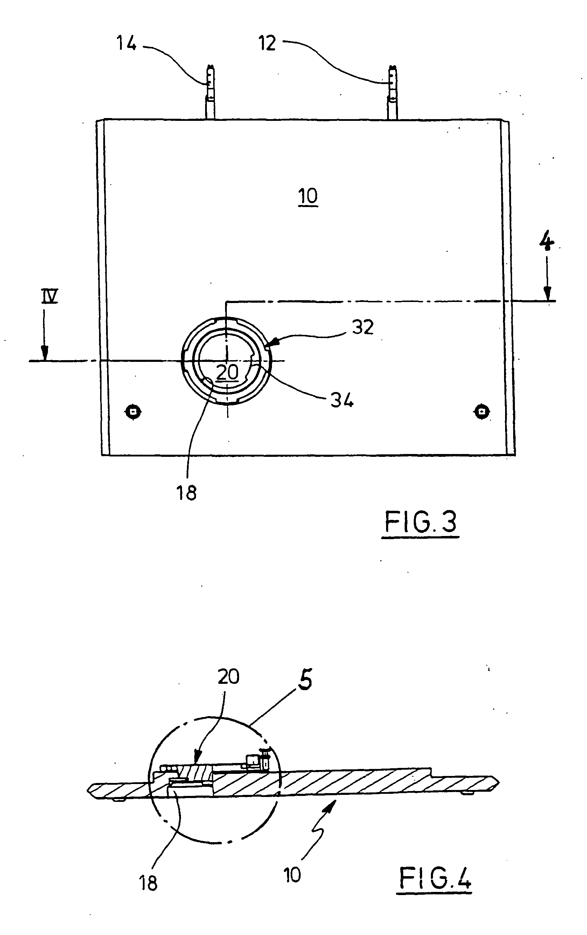

In Fig. 3 ist zu erkennen, daß an der Außenseite der Seitenwand 10 um die Öffnung 18 herum ein Anschlußprofil 32 geformt ist für eine Bajonettverbindung. Die Klappe 20, die in Fig. 3 in der geschlossenen Stellung gezeigt ist, weist auf der nach außen zeigenden Seite ein Mitnahmeprofil 34 auf, ebenfalls in Form eines Bajonett-Anschlußteils.

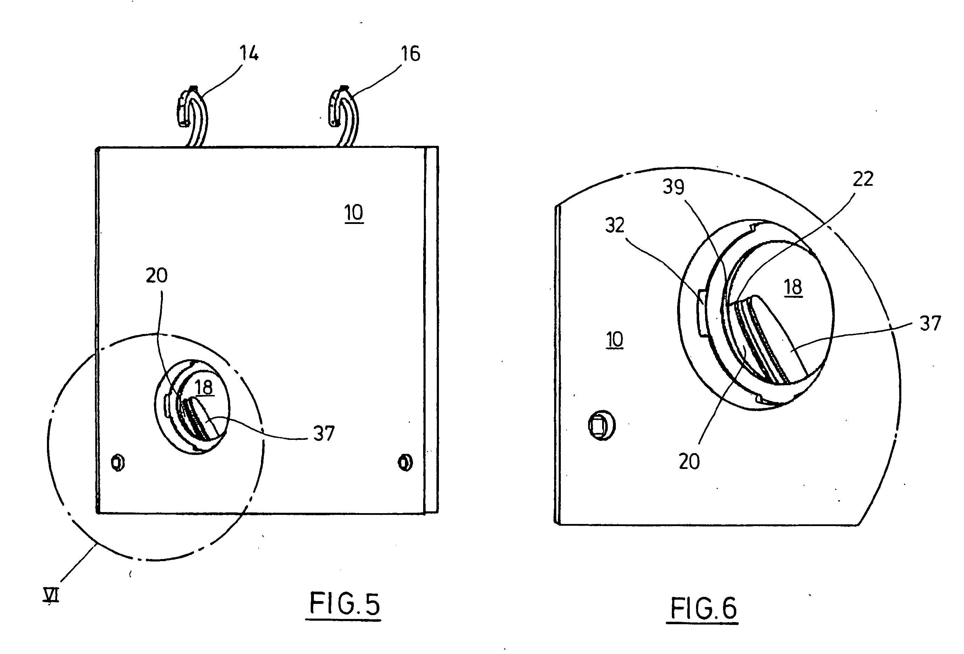

Ein nicht dargestellter Schleusenkanal hat an einem Ende ein Profil, das als Gegenprofil zum Anschlußprofil 32 ausgebildet ist. Durch axiales Ansetzen und anschließendes Drehen kann mithin der Schleusenkanal fest und dichtend mit der Fensterklappe 10 verbunden werden. Der nicht gezeigte Schleusenkanal weist außerdem eine zweite Klappe auf, die am Ende angebracht ist, und ein Gegenprofil aufweist zum Profil 34 der ersten Klappe 20. Beim beschriebenen Ansetzen des Schleusenkanals an die Fensterklappe 10 wird gleichzeitig die zweite Klappe über die Bajonettverbindung mit der ersten Klappe 20 dichtend verbunden. Beide Klappen bilden mithin eine Einheit und können, wenn die Verriegelungsvorrichtung 26 entriegelt ist, in das Gehäuse der Tablettenpresse hineingeschwenkt werden, wie dies in den Figuren 5 und 6 dargestellt ist. Dadurch besteht vom Schleusenkanal aus ein Durchgang in das Innere des Gehäuses und umgekehrt.

In den Figuren 5 und 6 ist bei 37 die Klappe des Schleusenkanals angedeutet, der mit der Klappe 20 über die beschriebene Bajonett-Verbindung verbunden ist.

Wie erkennbar, ist der Abschnitt 16 der Fensterklappe 10 mit dem Profil 32 einteilig geformt und anschließend an der Fensterklappe 10 durch Verklebung oder Verschweißung angebracht.

In Fig. 9 ist durch die gestrichelte Linie 37 der Umriß der zweiten Klappe angedeutet, die mit der ersten Klappe 20 verbunden ist. Das Gegenprofil des Schleusenkanals ist nicht dargestellt.

## Patentansprüche

1. Gehäuse für eine Tablettieranlage, das Seitenwände aufweist, von denen mindestens eine eine Öffnung (18) aufweist, mit einer ersten nach innen in das Gehäuseinnere verschwenkbaren Klappe (20) zum Verschließen der Öffnung (18), einer Verriegelungsvorrichtung (26) im Gehäuse für die Verriegelung der ersten Klappe (20), wobei der Öffnung (18) an der Außenseite ein Anschlußprofil (32) zugeordnet ist, das geeignet ist, mit einem Gegenprofil eines Schleusenkanals dichtend zusammengebracht zu werden, und die erste Klappe (20) an der Außenseite ein Mitnahmeprofil aufweist, das geeignet ist, mit einem Gegenmitnahmeprofil einer am Ende des Schleusenkanals gelagerten zweiten Klappe zusammenzuwirken, wenn das Gegenprofil des Schleusenkanals mit dem Anschlußprofil verbunden ist, wodurch beide Klappen in das Innere des Gehäuses geschwenkt werden können, wenn die Verriegelungsvorrichtung (26) entriegelt ist, **dadurch gekennzeichnet, daß** mindestens eine Seitenwand als Fensterklappe (10) aus durchsichtigem Material ausgebildet ist, ein Materialabschnitt (16) mit der Fensterklappe (10) die Öffnung aufweist, das Anschlußprofil (32) in dem Materialabschnitt (16) der Fensterklappe (10) herausgeformt ist, an dem Materialabschnitt (16) die erste Klappe (20) angelenkt ist und der Materialabschnitt (16) mit der Öffnung (18), dem Anschlußprofil (32) und einer Dichtfläche an der Fensterklappe (10) angeklebt oder angeschweißt ist.

2. Gehäuse nach Anspruch 1, **dadurch gekennzeichnet, daß** das Anschlußprofil (32) mit dem Gegenprofil eine Bajonettverbindung bildet.

3. Gehäuse nach Anspruch 1 oder 2, **dadurch gekennzeichnet, daß** das Mitnahmeprofil (34) mit dem Gegenmitnahmeprofil einen Bajonettverschluß bildet.

## Claims

1. A casing of a tabletting plant, wherein the casing has side walls where at least one side wall has an aperture (18) which is adapted to be closed by a first flap (20) which is pivotable inwardly into the interior of the casing and is adapted to be locked by an operable locking device (26), wherein the aperture is externally surrounded by a connection profile (32) which is adapted to be sealingly brought together with a counter-profile of a lock channel and the flap (20) externally has a driver profile which interacts with a counter-driver profile of a second flap mounted at the end of the lock channel when the counter-profile of the lock channel is connected to the connection profile, thus allowing to pivot the two flaps into the interior of the casing when the locking device (26) is unlocked, **characterized in that** at least one side wall is shaped as a window flap (10) and formed from a transparent material, one material portion (16) of the window flap (10) has the aperture, the connection profile (32) is formed integrally with the material portion (16) of the window flap (10),the first flap (20) is hinged to the material portion (16), and the material portion (16) with the aperture (18), the connection profile (32) and a sealing surface is pasted or welded to the window flap (10).

2. The casing according to claim 1, **characterized in that** the connection profile (32) and the counter-profile define a bayonet joint.

3. The casing according to claim 1 or 2, **characterized in that** the driver profile (34) and the counter-driver profile define a bayonet joint.

## Revendications

1. Carter pour une installation de préformage qui comporte des parois latérales dont au moins une présente un orifice (18), avec un premier volet (20) pivotant vers l'intérieur dans le carter destiné à fermer l'orifice (18), un dispositif de verrouillage (26) dans le carter pour verrouiller le premier volet (20), l'orifice (18), sur la face extérieure, recevant un profil de raccordement (32) qui est adapté pour être assemblé, de façon étanche, avec un contre-profil d'un canal de sas, et le premier volet (20) présente, sur sa face extérieure, un profil d'entraînement adapté pour être en interaction avec un contre-profil d'entraînement d'un second volet monté à l'extrémité du canal de sas, lorsque le contre-profil du canal de sas est relié au profil de raccordement, les deux volets pouvant être pivotés vers l'intérieur du carter, lorsque le dispositif de verrouillage (26) est déverrouillé, **caractérisé en ce qu'**au moins une paroi latérale a la forme d'un volet de fenêtre (10) en matériau transparent, un segment de matériau (16) avec le volet de fenêtre (10) comporte l'orifice, le profil de raccordement (32) dans le segment de matériau (16) dépasse du volet de fenêtre (10), le premier volet (20) reposant contre le segment de matériau (16) et le segment de matériau (16) avec l'orifice (18), le profil de raccordement (32) et une surface étanche est collé ou soudé contre le volet de fenêtre (10).

2. Carter selon la revendication 1, **caractérisé en ce que** le profil de raccordement (32) forme avec le contre-profil une liaison à baïonnette.

3. Carter selon les revendications 1 ou 2, **caractérisé en ce que** le profil d'entraînement (34) forme avec le contre-profil d'entraînement un joint à baïonnette.
